# EUROPÄISCHE PATENTSCHRIFT

(11) **EP 2 883 782 B1**
(45) Veröffentlichungstag und Bekanntmachung des Hinweises auf die Patenterteilung: **28.09.2016**
(21) Anmeldenummer: 14196486.6
(22) Anmeldetag: 05.12.2014
(51) Int. Cl.: B62D 35/00, B60Q 1/44, B60Q 1/26, B60Q 1/30

(54) **Baugruppe zum Bilden eines Luftleitelements für ein Kraftfahrzeug sowie Kraftfahrzeug mit einer Baugruppe**
Component for forming an air conduit element for a motor vehicle and motor vehicle with a component
Bloc destiné à former un élément de guidage d'air pour un véhicule automobile et véhicule automobile doté d'un bloc

(30) Priorität: 12.12.2013 DE 202013105651 U
(43) Veröffentlichungstag der Anmeldung: 17.06.2015
(73) Patentinhaber: REHAU AG + Co, 95111 Rehau (DE)
(72) Erfinder: Kammerer, Joerg, 95632 Wunsiedel (DE); Wolff, Christian, 95030 Hof (DE); Kirchgesner, Paul, 95145 Oberkotzau (DE); Anderseck, Bennet, 95028 Hof (DE)

(56) Entgegenhaltungen:
- DE-A1-102008 036 283
- DE-U1-202012 102 063
- US-A- 4 845 600

## Beschreibung

Die vorliegende Erfindung betrifft eine Baugruppe zum Bilden eines Luftleitelements für ein Kraftfahrzeug, mit einen schalenförmigen Luftleitkörper und einer Bremsleuchte, wobei der Luftleitkörper eine den Luftleitkörper durchsetzende längliche Öffnung aufweist und wobei zum Bilden des Luftleitelements die längliche Öffnung von einer Lichtaustrittsfläche der Bremsleuchte wenigstens bereichsweise verschließbar ist durch Anordnen der Bremsleuchte in einer vorgegebenen Bremsleuchten-Position. Die Bremsleuchte ist in der vorgegebenen Bremsleuchten-Position wenigstens bereichsweise von den Luftleitkörper umschlossen, wobei an einer Halteseite eines Luftleitkörper-Abschnitts des Luftleitkörpers wenigstens ein Halteelement und an einer Halteseite der Bremsleuchte wenigstens ein Gegenhalteelement angeformt ist. Zum Halten des Luftleitkörpers an der Bremsleuchte in der vorgegebenen Bremsleuchten-Position ist das Halteelement mit dem Gegenhalteelement verbindbar, wobei im verbundenen Zustand von Luftleitelement und Kraftfahrzeug das Halteelement und das Gegenhalteelement unterhalb der Bremsleuchte angeordnet sind.

Es ist bekannt derartige Luftleitelemente für Kraftfahrzeuge mit einer integrierten Bremsleuchte auszubilden. Die Luftleitkörper sind hierbei in der Regel in flacher Ausführung als dünnwandige Spritzgusskörper mit Wandstärken innerhalb eines Bereichs von 2 bis etwa 4 mm ausgebildet. Aufgrund dieser baulichen Vorgaben ist es erforderlich, den Luftleitkörper an der mit dem Kraftfahrzeug verbundenen Bremsleuchte zu halten, um insbesondere beim Fahren ein Flattern bzw. ein Verformen des Luftleitkörpers infolge von Anpresskräften der Luftströmungen in der Umgebung des Luftleitkörpers zu vermeiden. In einer der DE 20 2012 102 063 U1 entnehmbaren gattungsgemäßen Baugruppe sind an der Halteseite des Luftleitkörper-Abschnittes des Luftleitkörpers wenigstens ein Halteelement und an einer Halteseite der Bremsleuchte wenigstens ein Gegenhalteelement angeformt. Zum Halten des Luftleitkörpers an der Bremsleuchte in der vorgegebenen Bremsleuchten-Position ist dieses Halteelement an dem Gegenhalteelement haltbar.

Nachteilig an dieser bekannten Lösung ist jedoch, dass zur Ausbildung unterschiedlicher Varianten des Luftleitelements bzw. bei Nachfolgemodellen des Kraftfahrzeuges, die entsprechende neue Designmerkmale aufweisen, nicht nur das Luftleitelement neu konstruiert werden muss, sondern auch die entsprechende Bremsleuchte, da ansonsten das oder die Halteelemente des Luftleitkörpers nicht zwingend weiterhin zu den Gegenhalteelementen der Bremsleuchte korrespondieren und Halteelement und Gegenhalteelement infolge nicht länger miteinander verbindbar sind. Entsprechend sind selbst bei Kleinst- oder Kleinserien Anpassungen an der Bremsleuchte der Baugruppe erforderlich. Des Weiteren weist die aus dem Stand der Technik bekannte Konstruktion einen Nachteil dahingehend auf, dass der relativ zu dem gesamten Luftleitkörper gesehene Luftleitkörper-Abschnitt relativ schmal ausgebildet ist. Zwar weist dieser Luftleitkörper-Abschnitt über die Verbindung mit der Bremsleuchte eine erhöhte Steifigkeit auf, es kann jedoch insbesondere bei sehr hohen Geschwindigkeiten dennoch zu einem störenden Klappern aufgrund der Eigenbewegung des Luftleitkörper-Abschnittes gegenüber einem angrenzenden Bauteil des Kraftfahrzeuges kommen.

Gegenüber dieser bekannten Lösung ist es daher die Aufgabe der vorliegenden Erfindung, eine Baugruppe zum Bilden eines Luftleitelements für ein Kraftfahrzeug anzugeben, welche eine weiter verbesserte Funktionalität des Luftleitelementes bei gleichzeitig reduzierten Kosten im Hinblick auf Variantenvielfalt ermöglicht.

Diese Aufgabe wird erfindungsgemäß derart gelöst, dass ein Abstützelement vorgesehen ist zum Abstützen des Luftleitkörpers auf einem angrenzenden Bauteil des Kraftfahrzeuges, wobei das Abstützelement so ausgebildet ist, dass über das Abstützelement das Haltelement und das Gegenhalteelement miteinander verbindbar sind. Durch das erfindungsgemäße Vorsehen eines Abstützelementes zum Abstützen des Luftleitkörpers auf einem angrenzenden Bauteil des Kraftfahrzeuges wird zum einen auch bei sehr hohen Geschwindigkeiten die Klapperneigung weiter verringert und zum anderen kann über das Abstützelement, das so ausgebildet ist, dass über das Abstützelement das Halteelement und das Gegenhalteelement miteinander verbindbar sind, relativ kostengünstig eine weitgehend identische Bremsleuchte oder gleiche Bremsleuchte verwendet werden, da Unterschiede in verschiedenen Varianten der Baugruppe bzw. des Luftleitelementes über eine einfache Anpassung des Abstützelementes realisierbar sind. Hierbei ist das im Vergleich zu der Bremsleuchte wesentliche einfacher aufgebaute Abstützelement relativ einfach und kostengünstig versionsspezifisch umkonstruierbar. Das Abstützelement kann im Wesentlichen länglich ausgebildet sein. Bevorzugt ist das Abstützelement wenigstens so lang wie die Bremsleuchte.

Sowohl das Halteelement als auch das Gegenhalteelement können hakenförmig ausgebildet sein. Zum Verbinden von Halteelement und Gegenhalteelement können in der vorgegebenen Bremsleuchten-Position das Gegenhalteelement und das Halteelement jeweils in ein entsprechendes Hakenaufnahmeelement des Abstützelements hakbar sein. Hierbei sind das Halteelement und das Abstützelement durch Schieben des Abstützelementes in einer zu der länglichen Öffnung hingerichteten Verschiebeöffnung ineinander hakbar und durch Schieben in der zu der Verschieberichtung entgegengesetzten Richtung auseinander hakbar. Ergänzend kann hierbei das Gegenhalteelement und das Abstützelement durch Schieben der Bremsleuchte in einer zu der länglichen Öffnung hingerichteten Verschieberichtung ineinander hakbar sein und durch Schieben in der zu der Verschieberichtung entgegengesetzten Richtung auseinander hakbar sein. Neben einem sehr einfach vorzunehmenden Zusammenbau der Baugruppe zu dem Luftleitelement können Bremsleuchte, Abstützelement und Luftleitkörper hierdurch auch sehr leicht demontiert werden (z.B. bei einer Reparatur), insbesondere kann ohne großen Aufwand die Bremsleuchte ausgebaut werden.

Zur kostengünstigen Herstellung des Abstützelementes ist dieses vorzugsweise einstückig ausgebildet. Besonders bevorzugt ist das Abstützelement dabei im Kunststoff-Spritzguss hergestellt. Wie vorstehend bereits erläutert, kann durch eine entsprechende Anpassung des Abstützelementes sehr kostengünstig eine bestehende Bremsleuchte auf neue Varianten des Luftleitelements bzw. Luftleitkörpers angepasst werden.

Die Bremsleuchte kann mit wenigstens einem Befestigungsmittel zum Befestigen der Bremsleuchte an dem Kraftfahrzeug versehen sein. Besonders bevorzugt handelt es sich bei dem Befestigungsmittel um eine Schraubenaufnahme.

Der Luftleitkörper kann bevorzugt aus einem spritzfähigen (also im Kunststoffspritzguss verarbeitbaren) Kunststoffmaterial bestehen. Besonders bevorzugt kann der Luftleitkörper und/oder die Bremsleuchte wenigstens teilweise oder zur Gänze aus ABS (Abk. für Acryl-Butadien-Styrol), oder wenigstens teilweise oder zur Gänze aus einem Blendmaterial aus PC (Abk. für Polycarbonat) und ABS, oder wenigstens teilweise oder zur Gänze aus einem Blendmaterial aus PC und PET (Abk. für Polyethylenterephthalat), oder wenigstens teilweise oder zur Gänze aus einem Blendmaterial aus PC und PBT (Abk. für Polybutylenterephthalat), oder wenigstens teilweise oder zur Gänze aus einem Blendmaterial aus PP (Abk. für Polypropylen) und EPDM (Abk. für Ethylen-Propylen-Dien-Kautschuk) bestehen, wobei alle vorgenannten Materialien mit mindestens einem weiteren Füllstoff (insbesondere Mineral- und/oder Talkumfüllung) versehen sein können. Das Abstützelement kann bevorzugt aus POM (Abk. für Polyoxymethylen) oder PP oder PA (Abk. für Polyamid) bestehen, wobei alle vorgenannten Materialien mit mindestens einem weiteren Füllstoff (insbesondere Mineral- und/oder Talkumfüllung) versehen sein können.

Das Abstützelement kann ein weichelastisches Dämpfungselement aufweisen. Bevorzugt ist das weichelastische Dämpfungselement so an dem Abstützelement angeordnet, dass es im verbundenen Zustand von Luftleitelement und Kraftfahrzeug zwischen dem Abstütz-element und dem angrenzenden Bauteil des Kraftfahrzeuges positioniert ist. Das weichelastische Dämpfungselement dient hierbei zum einen zur weiteren Reduzierung von Klappergeräuschen zwischen dem Abstützelement und dem angrenzenden Bauteil und zum anderen zum Ausgleich von bauteilbedingten Toleranzen sowohl des Abstützelements als auch des angrenzenden Bauteils des Kraftfahrzeugs. Bei dem weichelastischen Dämpfungselement kann es sich insbesondere um einen Schaumstoffstreifen handeln. Das weichelastische Dämpfungselement ist bevorzugt aus einem Material gebildet, das Polyethylen (PP) oder Ethylen-Propylen-Dien-Kautschuk (EPDM) umfasst. Bei dem weichelastischen Material kann es sich um einen PP-Schaum oder ein EPDM-Schaum handeln. Das Dämpfungselement kann nachträglich an dem Abstützelement (z.B. mittels eines Klebestreifens oder Klebstoffes) angebracht sein, kann aber auch bei der Herstellung des Abstützelementes angeformt werden (z.B. im Wege des Zweikomponentenspritzgusses).

Das Luftleitelement kann insbesondere in Form eines Heckspoilers oder in Form eines Dachkanten-Heckspoilers ausgebildet sein.

Die Erfindung umfasst ferner ein Kraftfahrzeug mit einer erfindungsgemäßen Baugruppe, insbesondere einer Baugruppe nach einem der Ansprüche 1 bis 9.

Ein entsprechendes Kraftfahrzeug kann dadurch gekennzeichnet sein, dass das Abstützelement sich auf einer angrenzenden Verglasung des Kraftfahrzeuges abstützt. Bei der Verglasung kann es sich insbesondere um die Heckscheibe des Kraftfahrzeugs handeln.

Nachfolgend wird ein Ausführungsbeispiel der Erfindung anhand der beigefügten Zeichnungen näher erläutert. Es zeigen:
- Fig. 1: eine dreidimensionale Teilansicht des Luftleitkörpers, die dessen Innenseite zeigt;
- Fig. 2: eine dreidimensionale Darstellung des Abstützelements;
- Fig. 3: eine dreidimensionale Darstellung der Bremsleuchte;
- Fig. 4: eine dreidimensionale Darstellung der Bremsleuchte mit verbundenem Abstützelement;
- Fig. 5a: eine erste Querschnittsdarstellung der erfindungsgemäßen Baugruppe;
- Fig. 5b: eine weitere Querschnittsdarstellung der erfindungsgemäßen Baugruppe.

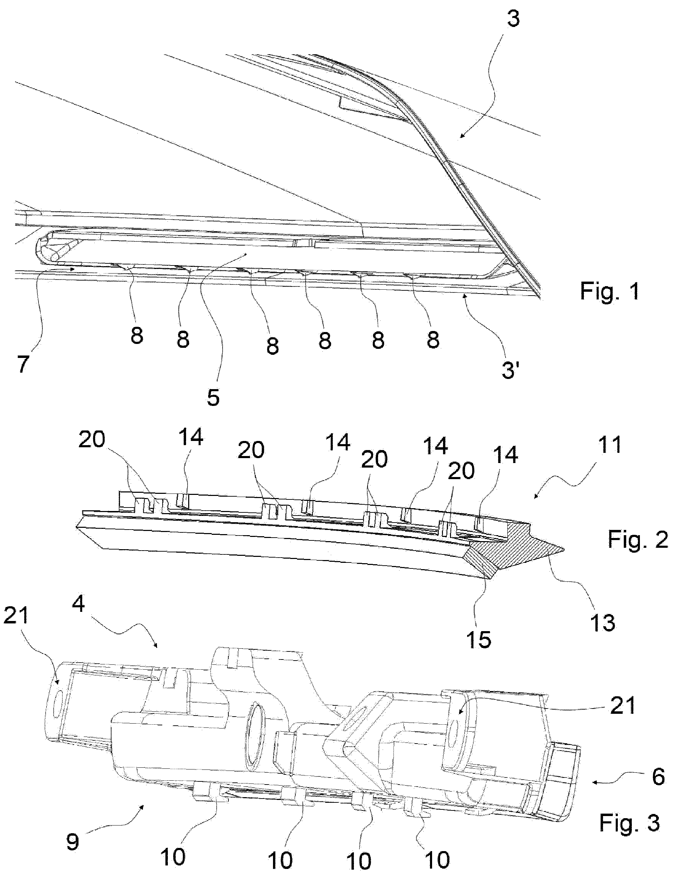

Die Fig. 1 zeigt die Innenansicht eines schalenförmigen Luftleitkörpers 3 mit einer den Luftleitkörper 3 durchsetzenden länglichen Öffnung 5. Innenansicht bedeutet in diesem Zusammenhang, dass die hier dargestellte Seite die der Sichtseite des Luftleitelements 2 gegenüberliegende Seite darstellt. An einer Halteseite 7 eines Luftleitkörper-Abschnittes 3' des Luftleitkörpers 3 sind Halteelemente 8 angeformt. Zum Halten des Luftleitkörpers 3 an einer Bremsleuchte 4 in der vorgegebenen Bremsleuchten-Position sind diese Haltelemente 8 mit Gegenhalteelementen 10 der Bremsleuchte 4 verbindbar.

In Fig. 2 ist ein Abstützelement 11 dargestellt, welches dazu vorgesehen ist, den Luftleitkörper 3 auf einem angrenzenden Bauteil 12, 12' des Kraftfahrzeuges abzustützen. Das Abstützelement 11 ist hierbei so ausgebildet, dass über das Abstützelement 11 zusätzlich die Halteelemente 8 und die Gegenhalteelemente 10 miteinander verbindbar sind. Das Abstützelement 11 weist ein weichelastisches Dämpfungselement 15 auf, das so an dem Abstützelement 11 angeordnet ist, dass es im verbundenen Zustand von Luftleitelement 2 und Kraftfahrzeug zwischen dem Abstützelement 11 und einem angrenzenden Bauteil 12, 12' des Kraftfahrzeuges positioniert ist. Zur besseren Verdeutlichung ist der Endbereich des Abstützelementes 11 geschnitten dargestellt.

In Fig. 3 ist eine Bremsleuchte 4 dargestellt, die mehrere Befestigungsmittel 21 zum Befestigen der Bremsleuchte 4 an dem Kraftfahrzeug aufweisen. Die Befestigungsmittel 21 bilden hierbei Aufnahmen für eine Schraubverbindung. Die Bremsleuchte 4 weist eine Lichtaustrittsfläche 6 auf, wobei zum Bilden des Luftleitelements 2 die längliche Öffnung 5 des schalenförmigen Luftleitkörpers 3 von der Lichtaustrittsfläche 6 der Bremsleuchte 4 wenigstens bereichsweise verschließbar ist durch Anordnen der Bremsleuchte 4 in einer vorgegebenen Bremsleuchten-Position, wobei die Bremsleuchte 4 in der vorgegebenen Bremsleuchten-Position wenigstens bereichsweise von den Luftleitkörper 3 umschlossen ist. An einer Halteseite 9 der Bremsleuchte 4 sind mehrere Gegenhalteelemente 10 angeformt. Wie bereits erläutert, sind zum Halten des Luftleitkörpers 3 an der Bremsleuchte 4 in der vorgegebenen Bremsleuchten-Position die Halteelemente 8 mit den Gegenhalteelementen 10 verbindbar, wobei im verbundenen Zustand von Luftleitelement 2 und Kraftfahrzeug die Halteelemente 8 und die Gegenhalteelemente 10 unterhalb der Bremsleuchte 4 angeordnet sind. Sowohl das Halteelement 8 als auch das Gegenhalteelement 10 sind hakenförmig ausgebildet.

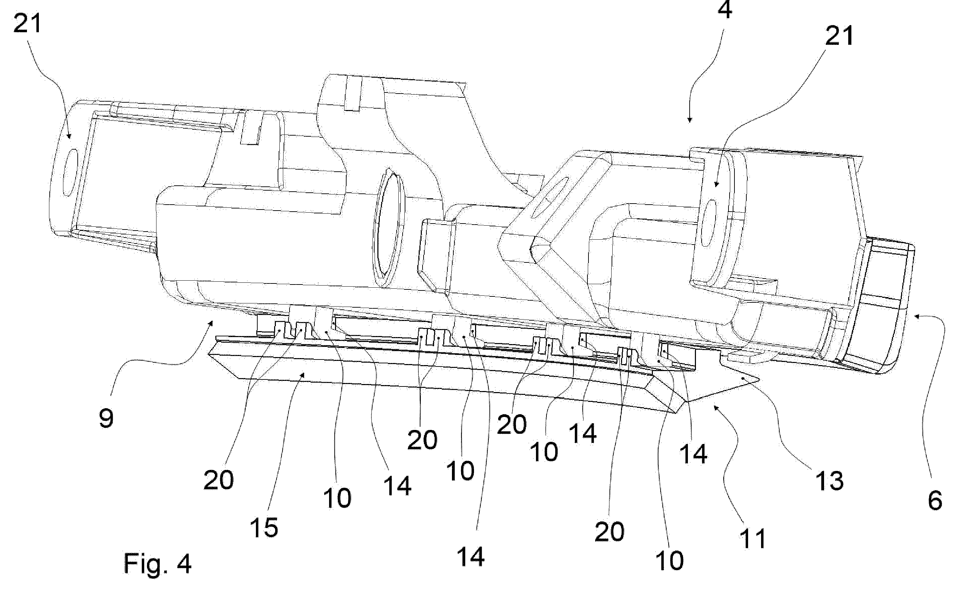

Die Fig. 4 zeigt die Bremsleuchte 4, wobei die hakenförmigen Gegenhalteelementen 10 zum Verbinden der Gegenhalteelemente 10 mit den Halteelementen 8 in der vorgegebenen Bremsleuchten-Position in entsprechende Hakenaufnahmeelemente 14 des Abstützelements 11 gehakt sind. Die Gegenhalteelemente 10 und das Abstützelement 11 sind durch Schieben der Bremsleuchte 4 in einer zu der länglichen Öffnung 5 hingerichteten Verschieberichtung ineinander hakbar und durch Schieben in der zu der Verschieberichtung entgegengesetzten Richtung auseinander hakbar.

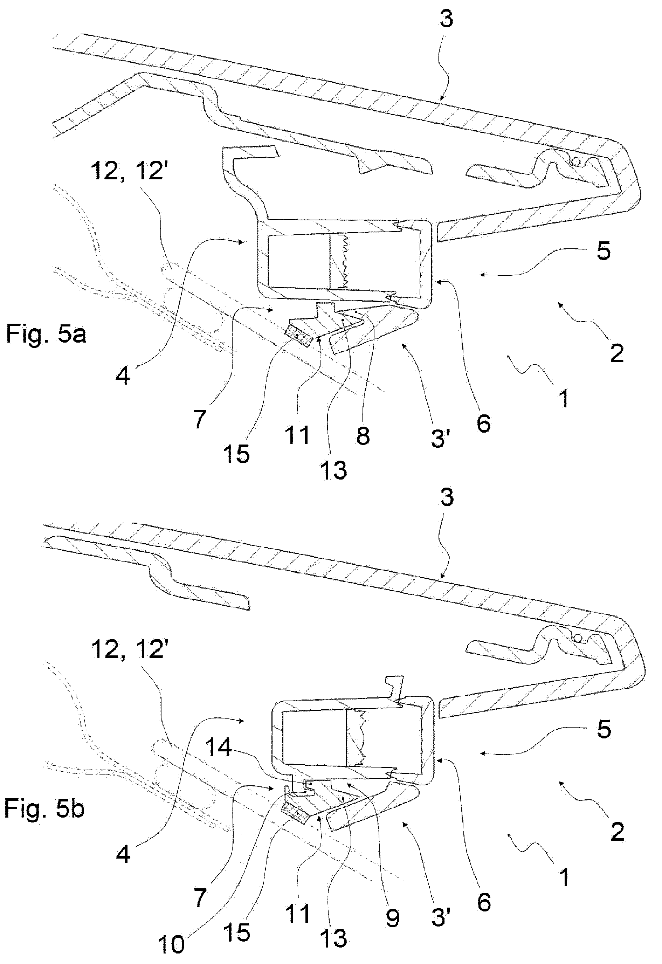

Die Fig. 5a und Fig. 5b zeigen verschiedene Querschnittsdarstellungen durch verschiedene Ebenen der erfindungsgemäßen Baugruppe 1 zum Bilden eines Luftleitelements 2 für ein Kraftfahrzeug, mit einen schalförmigen Luftleitkörper 3 und einer Bremsleuchte 4, wobei der Luftleitkörper 3 eine den Luftleitkörper 3 durchsetzende längliche Öffnung 5 aufweist, wobei zum Bilden des Luftleitelements 2 die längliche Öffnung 5 von einer Lichtaustrittsfläche 6 der Bremsleuchte 4 wenigstens bereichsweise verschließbar ist durch Anordnen der Bremsleuchte 4 in einer vorgegebenen Bremsleuchten-Position, wobei die Bremsleuchte 4 in der vorgegebenen Bremsleuchten-Position wenigstens bereichsweise von den Luftleitkörper 3 umschlossen ist. An einer Halteseite 7 eines Luftleitkörper-Abschnittes 3' des Luftleitkörpers 3 ist wenigstens ein Halteelement 8 und an einer Halteseite 9 der Bremsleuchte wenigstens ein Gegenhalteelement 10 angeformt. Zum Halten des Luftleitkörpers 3 an der Bremsleuchte 4 in der vorgegebenen Bremsleuchten-Position sind die Halteelemente 8 mit den Gegenhalteelementen 10 verbindbar. Im verbundenen Zustand von Luftleitelement 2 und Kraftfahrzeug ist das Halteelement 8 und das Gegenhalteelement 10 unterhalb der Bremsleuchte 4 angeordnet. Erfindungsgemäß ist ein Abstützelement 11 vorgesehen zum Abstützen des Luftleitkörpers 3 auf einem angrenzenden Bauteil 12, 12' des Kraftfahrzeuges, wobei das Abstützelement 11 so ausgebildet ist, dass über das Abstützelement 11 zusätzlich die Halteelemente 8 und die Gegenhalteelemente 10 miteinander verbindbar sind. Sowohl die Halteelemente 8 als auch die Gegenhalteelemente 10 sind hakenförmig ausgebildet, wobei zum Verbinden der Halteelemente 8 und Gegenhalteelemente 10 in der vorgegebenen Bremsleuchten-Position die Gegenhalteelemente 10 und die Halteelemente jeweils in entsprechende Hakenaufnahmeelemente 13, 14 des Abstützelements 11 hakbar sind. In dem dargestellten Ausführungsbeispiel sind die Halteelemente 8 mit dem Hakenaufnahmeelement 13 des Abstützelements 11 verbindbar (siehe Fig. 5a) und entsprechend die Gegenhalteelement 10 mit den entsprechenden Hakenaufnahmeelementen 14 des Abstützelements 11 verbindbar (siehe Fig. 5b). Die Gegenhalteelemente 10 der Bremsleuchte 4 sind zusätzlich jeweils durch Sicherungselemente 20 gegen ein ungewolltes aushaken gesichert. Die Halteelemente 8 und das Abstützelement 11 sind durch Schieben des Abstützelements 11 in einer zu der länglichen Öffnung 5 hingerichteten Verschieberichtung ineinander hakbar und entsprechend durch Schieben in der zu der Verschieberichtung entgegengesetzten Richtung auseinander hakbar. Die Gegenhalteelemente 10 und das Abstützelement 11 sind durch Schieben der Bremsleuchte 4 in einer zu der länglichen Öffnung 5 hingerichteten Verschieberichtung ineinander hakbar und entsprechend durch Schieben in der zu der Verschieberichtung entgegengesetzten Richtung auseinander hakbar Das Abstützelement 11 ist einstückig ausgebildet. Das Abstützelement 11 ist in einem Kunststoff-Spritzgussverfahren hergestellt. Der Luftleitkörper 3 besteht wenigstens teilweise aus ABS. Die Bremsleuchte 4 besteht wenigstens teilweise aus einem Blendmaterial aus Polycarbonat und ABS. Das Abstützelement 11 weist zusätzlich ein weichelastisches Dämpfungselement 15 auf, das so an dem Abstützelement 11 angeordnet ist, dass es im verbundenen Zustand von Luftleitelement 2 und Kraftfahrzeug zwischen dem Abstützelement 11 und dem angrenzenden Bauteil 12, 12' des Kraftfahrzeuges positioniert ist. Das Luftleitelement 2 kann in Form eines Heckspoilers oder in Form eines Dachkanten-Heckspoilers ausgebildet sein. Bei dem angrenzenden Bauteil 12 kann es sich insbesondere um eine angrenzende Verglasung 12' des Kraftfahrzeuges handeln, auf welcher sich entsprechend das Abstützelement 11 abstützt. Alternative Bauteile 12 können Türelemente (z.B. der Heckklappenrahmen) oder Teile des Dachs des Kraftfahrzeuges sein.

## Patentansprüche

1. Baugruppe (1) zum Bilden eines Luftleitelements (2) für ein Kraftfahrzeug, mit einem schalenförmigen Luftleitkörper (3) und einer Bremsleuchte (4),
wobei der Luftleitkörper (3) eine den Luftleitkörper (3) durchsetzende längliche Öffnung (5) aufweist,
wobei zum Bilden des Luftleitelements (2) die längliche Öffnung (5) von einer Lichtaustrittsfläche (6) der Bremsleuchte (4) wenigstens bereichsweise verschließbar ist durch Anordnen der Bremsleuchte (4) in einer vorgegebenen Bremsleuchten-Position, wobei die Bremsleuchte (4) in der vorgegebenen Bremsleuchten-Position wenigstens bereichsweise von dem Luftleitkörper (3) umschlossen ist,
wobei an einer Halteseite (7) eines Luftleitkörper-Abschnitts (3') des Luftleitkörpers (3) wenigstens ein Halteelement (8) und an einer Halteseite (9) der Bremsleuchte (4) wenigstens ein Gegenhalteelement (10) angeformt ist,
wobei zum Halten des Luftleitkörpers (3) an der Bremsleuchte (4) in der vorgegebenen Bremsleuchten-Position das Halteelement (8) mit dem Gegenhalteelement (10) verbindbar ist,
wobei im verbundenen Zustand von Luftleitelement (2) und Kraftfahrzeug das Haltelement (8) und das Gegenhalteelement (10) unterhalb der Bremsleuchte (4) angeordnet sind,
**dadurch gekennzeichnet, dass**
ein Abstützelement (11) vorgesehen ist zum Abstützen des Luftleitkörpers (3) auf einem angrenzenden Bauteil (12, 12') des Kraftfahrzeuges, wobei das Abstützelement (11) so ausgebildet ist, dass über das Abstützelement (11) das Haltelement (8) und das Gegenhaltelement (10) miteinander verbindbar sind.

2. Baugruppe (1) nach Anspruch 1, **dadurch gekennzeichnet, dass** sowohl das Halteelement (8) als auch das Gegenhalteelement (10) hakenförmig ausgebildet sind, wobei zum Verbinden von Haltelement (8) und Gegenhalteelement (10) in der vorgegebenen Bremsleuchten-Position das Gegenhalteelement (10) und das Halteelement (8) jeweils in ein entsprechendes Hakenaufnahmeelement (13, 14) des Abstützelementes (11) hakbar sind.

3. Baugruppe (10) nach Anspruch 2, **dadurch gekennzeichnet, dass** das Halteelement (8) und das Abstützelement (11) durch Schieben des Abstützelementes (11) in einer zu der länglichen Öffnung (5) hin gerichteten Verschieberichtung ineinander hakbar sind und durch Schieben in der zu der Verschieberichtung entgegengesetzten Richtung auseinander hakbar sind.

4. Baugruppe (10) nach Anspruch 2 oder 3, **dadurch gekennzeichnet, dass** das Gegenhaltelement (10) und das Abstützelement (11) durch Schieben der Bremsleuchte (4) in einer zu der länglichen Öffnung (5) hin gerichteten Verschieberichtung ineinander hakbar sind und durch Schieben in der zu der Verschieberichtung entgegengesetzten Richtung auseinander hakbar sind.

5. Baugruppe (1) nach einem der vorangehenden Ansprüche, **dadurch gekennzeichnet, dass** das Abstützelement (11) einstückig, vorzugsweise im Kunststoffspritzguss hergestellt, ausgebildet ist.

6. Baugruppe (1) nach einem der vorangehenden Ansprüche, **dadurch gekennzeichnet**, die Bremsleuchte (4) mit einem Befestigungsmittel (21) zum Befestigen der Bremsleuchte (4) an dem Kraftfahrzeug versehen ist.

7. Baugruppe (1) nach einem der vorangehenden Ansprüche, **dadurch gekennzeichnet, dass** der Luftleitkörper (3) wenigsten teilweise aus ABS besteht und/oder dass die Bremsleuchte (4) wenigstens teilweise aus einem Blendmaterial aus PC und ABS besteht.

8. Baugruppe (10) nach einem der vorangehenden Ansprüche, **dadurch gekennzeichnet, dass** das Abstützelement (11) ein weichelastisches Dämpfungselement (15) aufweist, das so an dem Abstützelement (11) angeordnet ist, dass es im verbundenen Zustand von Luftleitelement (2) und Kraftfahrzeug zwischen dem Abstützelement (11) und dem angrenzenden Bauteil (12, 12') des Kraftfahrzeuges positioniert ist.

9. Baugruppe (10) nach einem der vorangehenden Ansprüche, **dadurch gekennzeichnet, dass** das Luftleitelement (2) in Form eines Heckspoilers oder in Form eines Dachkanten-Heckspoilers ausgebildet ist.

10. Kraftfahrzeug mit einer Baugruppe nach einem der vorangehenden Ansprüche 1 bis 9.

11. Kraftfahrzeug nach Anspruch 10, **dadurch gekennzeichnet, dass** das Abstützelement (11) sich auf einer angrenzenden Verglasung (12') des Kraftfahrzeuges abstützt.

## Claims

1. Functional group (1) for forming an air-conduit element (2) for a motor vehicle, having a shell-shaped air-conduit body (3) and a brake light (4),
wherein the air-conduit body (3) has an elongate opening (5) which penetrates the air-conduit body (3),
wherein, in order to form the air-conduit element (2), the elongate opening (5) at least in regions is capable of being closed by a light-emitting face (6) of the brake light (4) by disposing the brake light (4) in a predefined brake-light position, wherein the brake light (4) in the predefined brake-light position at least in regions is enclosed by the air-conduit body (3),
wherein at least one holding element (8) is moulded on one holding side (7) of an air-conduit body portion (3') of the air-conduit body (3), and at least one counter-holding element (10) is moulded on one holding side (9) of the brake light (4),
wherein, in order to hold the air-conduit body (3) on the brake light (4) in the predefined brake-light position, the holding element (8) is connectable to the counter-holding element (10),
wherein in the connected state of the air-conduit element (2) to the motor vehicle, the holding element (8) and the counter-holding element (10) are disposed below the brake light (4),
**characterized in that**
a support element (11) for supporting the air-conduit body (3) on an adjacent component (12, 12') of the motor vehicle is provided, wherein the support element (11) is configured such that the holding element (8) and the counter-holding element (10) are interconnectable by way of the support element (11).

2. Functional group (1) according to Claim 1, **characterized in that** both the holding element (8) and the counter-holding element (10) are configured in a hook-shaped manner, wherein, in order for the holding element (8) and the counter-holding element (10) to be connected in the predefined brake-light position, the counter-holding element (10) and the holding element (8) each are capable of being hooked into a respective hook-receptacle element (13, 14) of the support element (11).

3. Functional group (10) according to Claim 2, **characterized in that** the holding element (8) and the support element (11) are capable of being hooked to one another by traversing the support element (11) in a traversing direction which is directed towards the elongate opening (5), and are capable of being unhooked from one another by traversing in the direction which is opposite to the traversing direction.

4. Functional group (10) according to Claim 2 or 3, **characterized in that** the counter-holding element (10) and the support element (11) are capable of being hooked to one another by traversing the brake light (4) in a traversing direction which is directed towards the elongate opening (5), and are capable of being unhooked from one another by traversing in the direction which is opposite to the traversing direction.

5. Functional group (1) according to one of the preceding claims, **characterized in that** the support element (11) is configured to be integral, preferably to be manufactured by plastics injection moulding.

6. Functional group (1) according to one of the preceding claims, **characterized in that** the brake light (4) is provided with a fastening means (21) for fastening the brake light (4) to the motor vehicle.

7. Functional group (1) according to one of the preceding claims, **characterized in that** the air-conduit body (3) at least in part is composed of ABS and/or that the brake light (4) at least in part is composed of a blended material from PC and ABS.

8. Functional group (10) according to one of the preceding claims, **characterized in that** the support element (11) has a flexible damping element (15) which is disposed on the support element (11) such that said damping element (15) in the connected state of the air-conduit element (2) to the motor vehicle is positioned between the support element (11) and the adjacent component (12, 12') of the motor vehicle.

9. Functional group (10) according to one of the preceding claims, **characterized in that** the air-conduit element (2) is configured in the form of a rear spoiler or in the form of a roof-edge rear spoiler.

10. Motor vehicle having a functional group according to one of preceding Claims 1 to 9.

11. Motor vehicle according to Claim 10, **characterized in that** the support element (11) is supported on an adjacent glass area (12') of the motor vehicle.

## Revendications

1. Module (1) pour former un élément de guidage d'air (2) pour un véhicule automobile, comprenant un corps de guidage d'air en forme de coque (3) et un feu de stop (4),
le corps de guidage d'air (3) présentant une ouverture oblongue (5) traversant le corps de guidage d'air (3),
l'ouverture oblongue (5) pouvant être fermée au moins en partie par une surface de sortie de la lumière (6) du feu de stop (4) pour former l'élément de guidage d'air (2), par agencement du feu de stop (4) dans une position prédéfinie du feu de stop, le feu de stop (4) étant au moins en partie entouré par le corps de guidage d'air (3) dans la position prédéfinie du feu de stop,
au moins un élément de retenue (8) étant formé au niveau d'un côté de retenue (7) d'une portion de corps de guidage d'air (3') du corps de guidage d'air (3) et au moins un élément de retenue conjugué (10) étant formé au niveau d'un côté de retenue (9) du feu de stop (4),
l'élément de retenue (8) pouvant être assemblé à l'élément de retenue conjugué (10) pour retenir le corps de guidage d'air (3) contre le feu de stop (4) dans la position prédéfinie du feu de stop,
l'élément de retenue (8) et l'élément de retenue conjugué (10), dans l'état assemblé de l'élément de guidage d'air (2) et du véhicule automobile, étant disposés en dessous du feu de stop (4),
**caractérisé en ce**
**qu'**un élément de support (11) est prévu pour supporter le corps de guidage d'air (3) sur un composant adjacent (12, 12') du véhicule automobile, l'élément de support (11) étant réalisé de telle sorte que l'élément de retenue (8) et l'élément de retenue conjugué (10) puissent être assemblés l'un à l'autre par le biais de l'élément de support (11).

2. Module (1) selon la revendication 1, **caractérisé en ce que** l'élément de retenue (8) ainsi que l'élément de retenue conjugué (10) sont réalisés en forme de crochet, l'élément de retenue conjugué (10) et l'élément de retenue (8), pour assembler l'un à l'autre l'élément de retenue (8) et l'élément de retenue conjugué (10) dans la position prédéfinie du feu de stop, pouvant être à chaque fois accrochés dans un élément de réception de crochet correspondant (13, 14) de l'élément de support (11).

3. Module (10) selon la revendication 2, **caractérisé en ce que** l'élément de retenue (8) et l'élément de support (11) peuvent être accrochés l'un dans l'autre par déplacement de l'élément de support (11) dans une direction de déplacement orientée vers l'ouverture oblongue (5) et peuvent être décrochés l'un de l'autre par déplacement dans la direction opposée à la direction de déplacement.

4. Module (10) selon la revendication 2 ou 3, **caractérisé en ce que** l'élément de retenue conjugué (10) et l'élément de support (11) peuvent être accrochés l'un dans l'autre par déplacement du feu de stop (4) dans une direction de déplacement orientée vers l'ouverture oblongue (5) et peuvent être décrochés l'un de l'autre par déplacement dans la direction opposée à la direction de déplacement.

5. Module (1) selon l'une quelconque des revendications précédentes, **caractérisé en ce que** l'élément de support (11) est réalisé d'une seule pièce, de préférence est fabriqué par moulage par injection de plastique.

6. Module (1) selon l'une quelconque des revendications précédentes, **caractérisé en ce que** le feu de stop (4) est pourvu d'un moyen de fixation (21) pour la fixation du feu de stop (4) au véhicule automobile.

7. Module (1) selon l'une quelconque des revendications précédentes, **caractérisé en ce que** le corps de guidage d'air (3) se compose au moins en partie d'ABS et/ou **en ce que** le feu de stop (4) se compose au moins en partie d'un matériau composite constitué de PC et d'ABS.

8. Module (10) selon l'une quelconque des revendications précédentes, **caractérisé en ce que** l'élément de support (11) présente un élément d'amortissement souple élastique (15) qui est disposé au niveau de l'élément de support (11) de telle sorte que dans l'état assemblé de l'élément de guidage d'air (2) et du véhicule automobile, il soit positionné entre l'élément de support (11) et le composant adjacent (12, 12') du véhicule automobile.

9. Module (10) selon l'une quelconque des revendications précédentes, **caractérisé en ce que** l'élément de guidage d'air (2) est réalisé sous la forme d'un becquet arrière ou sous la forme d'un becquet arrière d'arête de toit.

10. Véhicule automobile comprenant un module selon l'une quelconque des revendications 1 à 9.

11. Véhicule automobile selon la revendication 10, **caractérisé en ce que** l'élément de support (11) s'appuie sur une vitre adjacente (12') du véhicule automobile.
